# EUROPEAN PATENT APPLICATION

(11) **EP 4 797 443 A1**
(43) Date of publication of application: **26.08.2026**
(21) Application number: 25159452.9
(22) Date of filing: 21.02.2025
(51) Int. Cl.: H01Q 1/32, H01Q 1/42

(54) **RADOME FOR A RADAR DEVICE OF OR FOR A VEHICLE, RADAR DEVICE COMPRISING SUCH A RADOME AND VEHICLE BEING EQUIPPED WITH SUCH A RADAR DEVICE**

(71) Applicant: HELLA Saturnus Slovenija d.o.o., 1001 Ljubljana (SI)
(72) Inventor: Kogovsek, Janez, 1215 Medvode (SI); Zavodnik, Vid, 1261 Ljubljana-Dobrunje (SI); Bajec Strle, Alenka, 1000 Ljubljana (SI); Polajnar, Miha, 4240 Radovljica (SI)
(74) Representative: Behr-Wenning, Gregor

(57) **Abstract**

The present invention is drawn to a radome (14) for a radar device (101, 102, 103, 104) of or for a vehicle, the radome (14) comprising a cover member (18) made of at least substantially radar-transparent and light-transparent or light-translucent material, a structural member (20) made of at least substantially radar-transparent and light-transparent or light-translucent material and having a first surface (24) and a second surface (26), wherein the cover member (18) encloses the structural member (20), a light-reflective layer (32) at least partially applied to the first surface (24), and a further structural member (40) applied to the light-reflective layer (32) or to the structural member (20), wherein the structural member (20) forms at least one subsection (B1, B2, B3, B4) in which a distance (D, D1, D2, D2, D3, D4) between the first surface (24) and the second surface (26) is continuously decreased.

## Description

### DESCRIPTION

The present invention relates to a radome for a radar device of or for a vehicle, a radar device comprising such a radome and a vehicle being equipped with such a radar device.

### PRIOR ART

Radar devices for environmental monitoring are widely used in modern motor vehicles, especially in the course of the advancing capability for (partially) autonomous driving. Long-range radar transceivers are usually operated in a frequency range between 72 GHz and 96 GHz and short-range radar transceivers in the frequency range around 24 GHz. Generally, radar transceivers may also be operated at frequencies above 100 GHz and in particular in a frequency range between 130 GHz and 150 GHz, in some cases even up to 300 GHz where a better resolution of objects in the surroundings of the vehicle may be obtained compared to the lower frequency range.

Such radar devices usually comprise radar transmitters and receiver elements that are arranged close to each other, often integrated in the same unit. Such a unit may be a radar transceiver which is able to emit radar waves and to receive the radar waves reflected by objects in the environment of the given vehicle. To protect the radar transceivers from environmental and weather influences, they are covered by suitable radomes, which are designed as lid-shaped or dome-shaped covers. The radomes may be integrated into cladding components of a given vehicle such as into larger panels, like front-of-the-car panels or front shields. In order to avoid an impairment of the radar surveillance, the radomes must be designed in such a way that they have as little detrimental interaction as possible with transmitted radar waves of the aforementioned frequency ranges. The interaction may result in an attenuation of the radiation intensity, which is dependent on the material and wall thickness of the radome and can become significant in particular with metallic coatings, for example decorative elements made of chrome.

Non-illuminated radomes typically comprise at least two layers, namely a cover member and at least one structural member on which the cover member is mounted. Illuminated radomes, to which the present invention relates to, usually further comprise an optical lens. The cover member is exposed to the environment, while the structural member in particular in illuminated radomes serves as a light guide for guiding the light that is provided by a light source inside the radome. In this case, the structural member is also referred to as optical lens. In sophisticated designs, the radome is illuminated or illuminable in such a way that the brand logo is particularly prominent at night. For example, the brand logo can be formed by translucent areas of the radome or the brand logo stands out as an opaque pattern against an illuminated background. However, the structural members may also serve as a structural element for reinforcing the radome. Such radomes are disclosed in DE 10 2018 009 270 A1 A2, WO 2021/047772 A1 and EP 3 563 449 B1.

In the design of illuminated radomes, electromagnetic waves with different ranges of wavelengths have to be considered, namely the light waves and the radar waves which may lead to a certain conflict of objects. A radome optimized for radar performance may not necessarily lead to homogenous illumination, while a homogenously illuminable radome may not provide an optimal radar performance.

It is therefore one task of one embodiment of the present invention to present a radome by which the drawbacks mentioned above can at least be reduced. In particular it is one task to present a radome that provides a good radar performance but is at the same time homogeneously illuminable. Furthermore, an embodiment of the present invention has the object to provide a radar device comprising such a radome and to provide a cladding component for a vehicle with such a radar device. Beyond that, the present invention has the object to present a vehicle being equipped with such a radar device and/or with such a cladding component.

The task is solved by the features specified in claims 1, 12, 13 and 14. Advantageous embodiments are the subject of the dependent claims.

According to an embodiment the radome for a radar device of or for a vehicle comprises
- a cover member made of a substantially radar-transparent and light-transparent or light-translucent material,
- a structural member made of at least substantially radar-transparent and light-transparent or light-translucent material and having a first surface and a second surface, wherein the cover member at least partially encloses the structural member,
- a light-reflective layer at least partially applied to the first surface, and
- a further structural member applied to the light-reflective layer or to the structural member, wherein
- the structural member forms at least one subsection in which a distance between the first surface and the second surface is continuously decreased.

As mentioned earlier, the structural member can be used as a light guide for the illumination of the radome. For this purpose, the structural member is not only made of a radar-transparent material, but also of a light-transparent or light-translucent material.

The term "substantially radar-transparent material" is to be understood such that the material should be chosen to have a minimal attenuation for radar waves. However, every material will have a certain attenuating effect on the radar waves which means that an absolute radar transparent material does not exist. Parameters influencing the radar-transparency are high transmission and low reflection - therefore, low absorption dielectric materials and low loss dielectric material in radar operating frequency are considered.

A similar situation is encountered with light. A completely light transparent material does not exist. However, as light transparent and light translucent materials, those materials are considered, which are not completely blocking light and allow at least some light to pass. These materials can therefore also be diffusive, semi-transparent and the like.

The cover member may also be partially opaque, for example, 2K clear PC and black PC.

The further structural member has preferably similar dielectric properties as the structural member. The same material may be used, however, when the dielectric properties are sufficiently similar, also a different material can be used for the further structural member. The material of the further structural member can be light transparent or light translucent or opaque.

The light reflective layer can be applied on the entire first surface or only on sections of the first surface, depending on the circumstances of the radome. It is also possible to only apply a white layer on some areas, metal layers on others, while applying black or no layers on areas where hot spots are expected.

To avoid any interference between the light source and the radar waves, the light sources are typically arranged outside the propagation area of the radar waves which means that the light provided by the light source is coupled into the structural member at its lateral margins. In structural members of radomes known from the prior art, it has been found that the brightness of the light decreases moving further away from the light source. In case of radomes that are provided with light sources in the lateral margins all around the radome, the brightness decreases can be which can be towards the center. The brightness might be decreasing in a different manner in cases where, for example, light source is provided predominantly on one side of the radome, but typically the brightness is still decreasing moving away from the light source.

According to the present embodiment, the structural member forms a distance between the first surface and the second surface which could be defined as the shortest distance between these two surfaces. Within the subsections, the distance is continuously decreasing, which is not necessarily to be understood that it should change linearly or in a strictly defined manner, but it means that the structural member does not form steps in areas where light is to be out-coupled. Outside the outcoupling areas, steps are acceptable. The slope that is formed due to the decreasing distance would typically not be bigger than 45°, but in general it would not be bigger than 90°, wherein the slope refers to the surface of the structural member adjacent to the subsection. The subsections act as light outcoupling areas where compared to the remaining structural member an increased amount of light can exit. The subsections can be arranged such that they follow the shape of a brand logo of the vehicle manufacturer.

According to the present invention, a light-reflective layer is at least partially applied to the first surface. Such a layer only functions to reflect the light propagating in the structural member and is typically used as an outcoupling element. However, since such a design requires another layer to protect said structural member from environmental impact, such as humidity, dust particles, and at the same time, to prevent light leakage and improve light performance, an additional part is introduced on the back of the structural member. Since such a radome would have three elements in front of the radar, this would affect radar performance. To prevent a decline in performance due to illumination function, the reflector is removed in the area of the radar cone. In its place, a light reflective layer is applied to the first surface. In such an embodiment, TIR conditions are possible only on the second surface and not on the first surface of the light guide.

A further structural member is fastened to the light-reflective layer or to the structural member. As mentioned earlier, the distance between the first surface and the second surface of the structural member is decreasing at least inside one subsection of the radome for providing a more homogenous illumination of the radome. However, the decreasing distance may lead to a changing electromagnetic thickness influencing the radar waves that are penetrating the radome. The changing electromagnetic thickness leads to an increasing attenuation of the radar waves. Using a further structural member which may be made of the same material as the structural member, the electromagnetic thickness can be homogenized, thereby improving the radar performance. The structural member and the further structure member may be combined into a single integral part.

It has been found that such structural members lead to a more homogenous brightness of the light coupled into the structural members at their margins compared to known radomes. The brand logo of the vehicle manufacturer can be homogenously illuminated without significantly impairing the radar performance.

Some illuminated radomes known in art use decorative elements to reflect light, but do not use a formed shape to optimize light efficiency. According to the present invention, it is possible to use optimization of light efficiency independent of decoration and decorative layers. Light optimization is possible also for 2D-looking logos. Reflection and optimization is realized within the entire light guide. This is not the case with known radomes with 3D structures that reflect lights and are used as decorative layers.

In a further embodiment the radome comprises a light source for illuminating the radome. The light source may be arranged such that the light provided by the light source is coupled into the structural member. It is possible to arrange a light source remote from the radome. However, in this embodiment, the light source is integrated into the radome which leads to a facilitated mounting into the cladding component or the vehicle.

In another embodiment the light source is arranged such that the light provided by the light source is coupled into the structural member. In this embodiment, the light source can be arranged relative to the structural member such that the light is optimally coupled into the **structural** member, thereby minimizing light losses. Further components for coupling the light into the structural member can be omitted.

In another embodiment the radome comprises
- a first subsection having a first distance and a second subsection having a second distance, wherein the second subsection is arranged further away from the light source than the first subsection, wherein
- the second distance is smaller than the first distance.

It has been found that the amount of light that exits the structural member is increasing with decreasing distance. In this embodiment, the distances can be chosen such that an equal or at least similar amount of light exits the structural member in the first subsection and the second subsection leading to a homogeneous illumination of the radome.

According to a further embodiment,
- between the cover member and the structural member
   ∘ an air gap is formed, or
   ∘ an at least substantially radar-transparent and light transparent or light translucent material with a low refractive index layer that has a refractive index lower than the refractive index of the structural member is arranged, or
   ∘ a low refractive-index layer with a refractive-index that is lower than the refractive index of the structural member, or
   ∘ a further light reflective layer with cut-outs for light outcoupling is arranged, or
the cover member is made of material with a refractive index which is lower than the refractive index of the material of the structural member.

A further embodiment is characterized in that
- the light source is arranged inside a housing that
   ∘ is fastened to the cover member and/or the structural member and
   ∘ forms an inner opening for the radar waves or is made of a radar-transparent material or
- the light source is fastened to the structural member or to the cover member.

By arranging the light source inside a housing, the light source is protected. Moreover, the housing can be used for directing the light towards the structural member, thereby minimizing light losses. In case the light source is directly fastened to the structural member or the cover member, the housing can be omitted, thereby keeping the number of parts low. The light sources can also be inmolded into the structural member or just attached close to the structural member (e.g., fastened to the structural member or the cover member).

In another embodiment the light-reflective layer and/or the further light-reflective layer is opaque to light. While a certain portion of the impinging light may be reflected, another portion may be able to penetrate the protective layer. However, in this embodiment the protective layer is opaque to light which means that almost the entire light impinging on the protective layer can be reflected provided the protective layer is reflective. Thus, only very little light gets lost, and the radome can very efficiently be illuminated.

A further embodiment is characterized in that the light-reflective layer comprises white or colored PC, PMMA or PET film or resin, white or colored lacquer, white or colored tampon or pad print, white or colored screen print and/or metallized and/or a white or other color pigment. It is expected that autonomous driving is indicated by turquoise color. PC and/or PMMA can be provided by a film, a foil or by resin. In this embodiment, the light-reflective layer can be provided in a fairly simple and cost-effective way. The red pigment is particularly useful when the brand logo is to be arranged on the rear of the vehicle. A white light-reflective layer provides a high degree of reflection.

In another embodiment
- the structural member has a second surface and the further structural member has an inwardly facing surface, and
- the radome forms a radome distance between the second surface and the inwardly facing surface, wherein the radome distance stays constant at least in sections.

The radome distance can be more or less considered as the electromagnetic thickness as previously mentioned. The more constant the radome distance, the better the radar performance. However, the radar performance is not only influenced by the homogeneity of the radome thickness but also of the size of the radome thickness. With increasing radome thickness, the radar performance typically increases and decreases in a sinusoidal way. In this embodiment, the further structural member cannot only be made such that the electromagnetic thickness is kept constant at least in sections but is also in an area of maximum radar performance.

A further embodiment the radome comprises a decorative layer arranged
- between the structural member and the cover member and/or
- on the outer surface.

If there is contact between the cover and the structural member, it is beneficial to provide another reflective layer between the decorative layer and the structural layer, to avoid light loss. Ideally, there should be an air gap or a low refractive index layer between decorative layer and structural layer.

By means of the decorative layer, any desired shape can be generated on the cover layer, in particular the brand logo of the vehicle manufacturer which can be illuminated by the light source. The shape can be changed in a fairly easy way.

In a further embodiment a further light-reflective layer is at least partially applied to the second surface. Total reflection is only obtained in the case of an air gap or a low refractive index layer. Otherwise, rays are reflected from each surface, reflectance depending on the material properties of the materials in contact. For example, due to the dome-shape of the radome or contact with the decorative layer, the use of a further light reflecting layer that is applied to the second surface at least in parts helps light propagation and prevents light leakage.

A further embodiment the decorative layer and/or the further light-reflective layer forms cut-outs. The light coupled into the structural member can leave the same through the cut-outs. The cut-outs may follow the brand logo of a given vehicle manufacturer or other patterns. Using the cut-outs is a fairly simple way to illuminate the radome by the brand-logo or other patterns.

Another aspect of the invention is directed to a radar device of or for a vehicle, comprising a radome according to one of the embodiments previously discussed and a radar source for providing radar waves.

An implementation of the present invention is drawn to a cladding component of or for a vehicle, comprising
- a radome according to one of the embodiments previously presented and/or
- a radar device as mentioned above.

An aspect of the present invention is directed to a vehicle comprising
- a radome according to one of the embodiments presented above, and/or
- a radar device as mentioned before and/or
- cladding component as previously described.

The technical effects and advantages as discussed regarding the present radome to a large extent also apply to the radar device, the cladding component and the vehicle. Briefly, an improved and more homogenous illumination of the radome can be obtained without compromising the radar performance.

### PREFERRED EMBODIMENTS OF THE INVENTION

The present invention is described in detail with reference to the drawings attached wherein
- Figure 1: shows a first embodiment of a radar device according to the invention,
- Figure 2: shows a second embodiment of a radar device according to the invention,
- Figure 3: shows a third embodiment of a radar device according to the invention,
- Figure 4: shows a fourth embodiment of a radar device according to the invention, and
- Figure 5: shows a vehicle comprising a radar device according to the present invention.

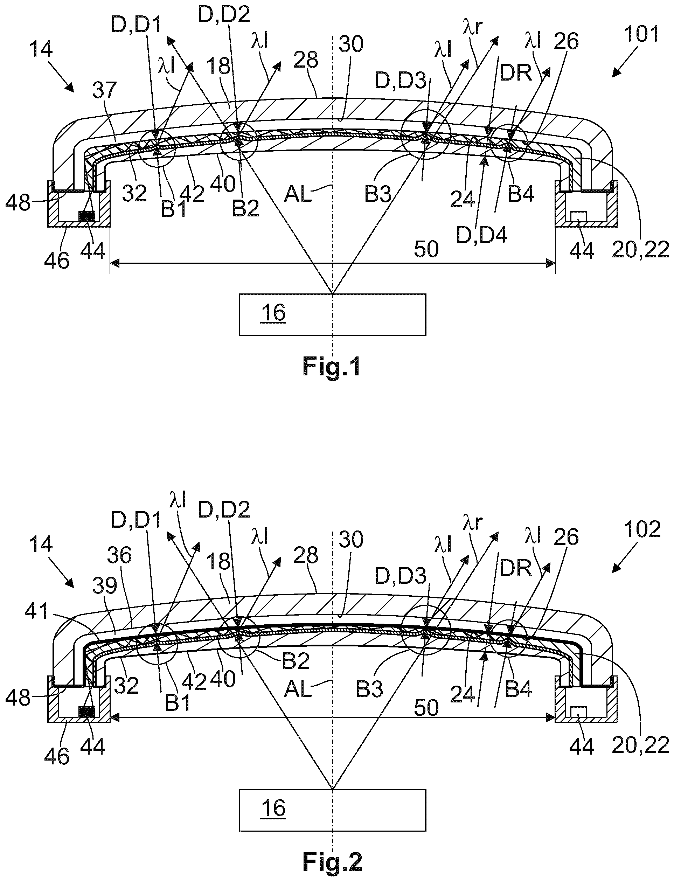

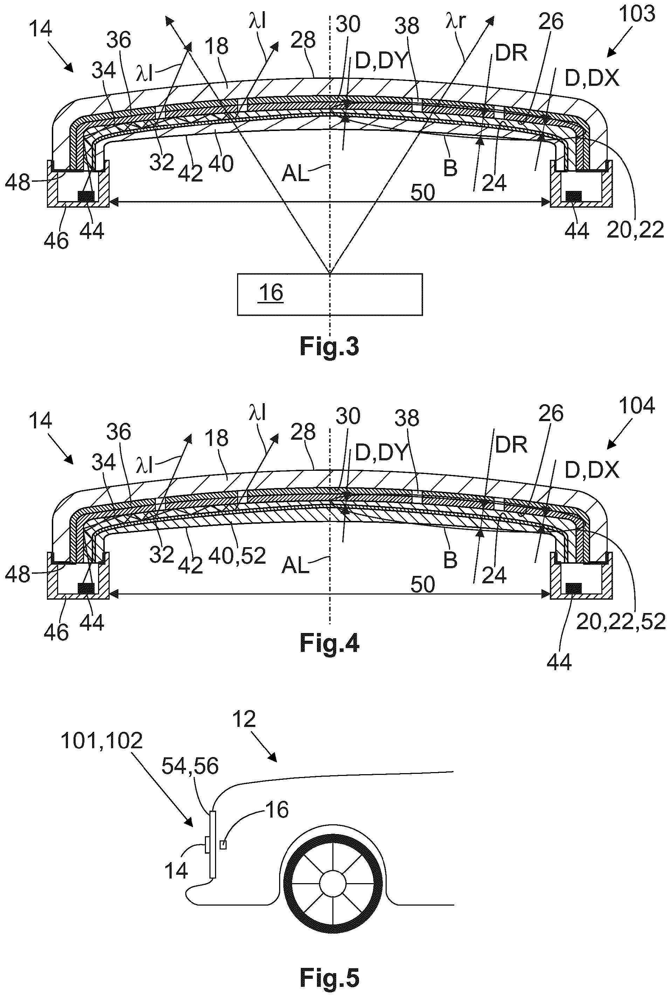

Figure 1 shows a first embodiment of a radar device 101 according to the present invention which can be used for a vehicle 12 (see Figure 5). The radar device 101 comprises a radome 14 and a radar source 16 for generating radar waves λr. The radome 14 is arranged at or near the front end of the vehicle 12, while the radar source 16 is placed towards the center of the vehicle 12 (see Figure 3). The radar device 101 defines a central longitudinal axis AL.

The radome 14 has a cover member 18 and a structural member 20, the structural member 20 being embodied as an optical lens 22. For this purpose, the structural member 20 is made of a radar-transparent and light-transparent material, in particular plastic or resin. The structural member 20 has a first surface 24 and a second surface 26. The first surface 24 is facing the radar source 16 while the second surface 26 is directed towards the cover member 18. The cover member 18 and the structural member 20 are separated from one another by an air gap 37.

The cover member 18 is also made of a radar-transparent and light-transparent material and forms an outer surface 28 and an inner surface 30. The outer surface 28 is facing the exterior of the vehicle 12 while the inner surface 30 points to the radar source 16. A light-reflective layer 32 is applied on the first surface 24.

As mentioned, the light-reflective layer 32 is applied to the first surface 24. Beyond that, a further structural member 40 is arranged on the light-reflective layer 32. The further structural member 40 forms an inwardly facing surface 42 that is pointing to the radar source 16.

The radome 14 is dome-shaped and further comprises at least one light source 44 for illuminating the radome 14. One light source 44 is arranged inside a housing 46 that is fastened to the left lateral margin of the radome 14. The light source 44 arranged on the right margin of the radome 44 is shown in a switched-off mode. It may be switched on to achieve a better illumination of the center of the radome 14.

In the embodiment shown the housing 46 is fastened to the radome 14 by glue 48. Glue 48 might be opaque and might form a gap on the structural member 20 such that the light λl provided by the light source 44 is coupled into the structural member 20 only.

As an alternative to glue 48, the housing 46 can be fastened to the radome by other fastening methods like welding, snap-fit and/or screws. If a snap-fit or screws are used, a seal should be provided to ensure that no moisture can leak into the radome 14.

The housing 46 has a ring-shape and forms an inner opening 50 through which the radar waves λr can penetrate without interfering with the housing 46.

The radome 14 has a radome distance DR between the inner surface 30 of the cover member 18 and the inwardly facing surface 42 of the further structural member 40.

The first surface 24 and the second surface 26 are separated from one another by a distance D. In the first embodiment of the radar device 101, the structural member 20 forms in total four subsections B1 to B4. Within the subsections B1 to B4, the distances D1 to D4, respectively, are indicated. It is evident that within the subsections B1 to B4, the distances D1 to D4 are smaller compared to the distance between the first surface 24 and the second surface 26 in the areas adjacent to the subsections B1 to B4. The first subsection B1 is arranged closest to the light source 44 while the fourth subsection B4 is arranged at the largest space from the light source 44. The distance D1 is the biggest and the distance D4 is the smallest. In other words, the distance D increases with increasing space of the subsections B1 to B4 from the light source. Between two adjacent subsections, e.g., between the first subsection B1 and the second subsection B2, the distance increases again.

The radome distance DR separating the outer surface 28 and the inwardly facing surface 42 is only shown in one location as it remains constant or almost constant.

The distance D influences the way the light is propagating through the structural member 20 while the radome distance DR influences the radar waves λr penetrating the radome 14. As shown in Figure 1, the light provided by the light source 44 is coupled into the structural member 20 and propagates the same until it reaches the first subsection B1 in which a significant amount of light can exit the structural member 20 and the radome 14. The remaining light exits the structural member 20 predominantly in the second, third and fourth subsection B2 to B4.

It has been found that due to the decreasing distance D between the first surface 24 and the second surface 26 the brightness of the light λl leaving the subsections, e.g., B3 and B4 further away from the light source 44 is almost the same as the brightness of the light leaving the subsections, e.g., B1 and B2 closer to the light source. Thus a homogenous illumination of the radome 14 is obtained.

The further structural member 40 is designed such that the radome distance DR remains constant or almost constant. The radome distance DR can more or less be considered as the electromagnetic thickness the radar waves need to overcome when passing through the radome 14. A constant radome distance DR leads to an improved radar performance of the radome 14. As mentioned earlier, the radar performance typically increases and decreases in a sinusoidal way with increasing radome 14 thickness. The further structural member 40 can be designed that a radome 14 thickness is obtained leading to a minimized attenuation and thus to an optimized radar performance.

Figure 2 shows a second embodiment of the radar device 102 according to the invention which is largely similar to the first embodiment of the radar device 101. However, instead of an air gap 37, the space between the cover member 18 and the structural member 20 is filled by a substantially radar-transparent material 39. Moreover, a low refractive-index layer 41 is arranged on the second surface 26 of the structural member 20.

Figure 3 shows a third embodiment of the radar device 103 according to the invention which is largely similar to the first embodiment of the radar device 101. However, a further light-reflective layer 34 is applied on the second surface 26 of the structural member 20. A decorative layer 36 is arranged between the further light-reflective layer 34 and the inner surface 30 of the cover member 18 such that no air gaps are formed. However, the further light-reflective layer 34 and the decorative layer 36 are provided with cut-outs 38.

In the third embodiment of the radar device 103, at least two light sources 44 are arranged inside the housing 46. For the sake of clarity, the way the light emitted by the light source arranged on the right margin of the radome 14 is travelling is not depicted.

The radome 14 is of a higher symmetry compared to the radome 14 of the radar devices 101 and 102 shown in Figures 1 and 2 and thus can only be subdivided into one subsection B. Within the subsection B, two distances DX and DY are indicated. The distance DX is arranged closely to the light sources 44 while the distance DY is located almost at the central longitudinal axis AL. The distance DY is smaller than the distance DX. The distance D is constantly decreasing from the light source 44 to the central longitudinal axis AL.

Figure 4 shows a fourth embodiment of the radar device 104 (without radar source 16) which is to a large extent similar to the radar device 103 of the third embodiment. However, in the fourth embodiment the structural member 20 and the further structural member 40 are provided as a single integral part 52 with the light-reflective layer 32 running through this single integral part 52 in the same way as described for the first embodiment of the radome 14. This single integral part 52 may be obtained by an additive manufacturing method or by molding the single integral part 52 around the light-reflective layer 32.

Figure 5 is a principle sketch of the front portion of a vehicle 12 that is equipped with a radar device 101, 102 according to one of the embodiments previously presented. The radome 14 is fastened to a cladding component 54 of the vehicle 12, in this case to its front grille 56. Thus, the radome 14 is arranged at or near the front end of the vehicle 12, while the radar source 16 is placed towards the center of the vehicle 12.

### REFERENCE LIST

- 101 - 104: radar device
- 12: vehicle
- 14: radome
- 16: radar source
- 18: cover member
- 20: structural member
- 22: optical lens
- 24: first surface
- 26: second surface
- 28: outer surface
- 30: inner surface
- 32: light-reflective layer
- 34: further light-reflective layer
- 36: decorative layer
- 37: air gap
- 38: cut-outs
- 39: radar-transparent material
- 40: further structural member
- 41: low refractive-index layer
- 42: inwardly facing surface
- 44: light source
- 46: housing
- 48: glue
- 50: inner opening
- 52: single integrated part
- 54: cladding component
- 56: grille
- AL: longitudinal axis
- B, B1 - B4: subsection
- D, D1, D2: distance
- DR: radome distance
- λl: light
- λr: radar waves

## Claims

1. Radome (14) for a radar device (101, 102, 103, 104) of or for a vehicle, the radome (14) comprising
- a cover member (18) made of at least substantially radar-transparent and light-transparent or light-translucent material,
- a structural member (20) made of at least substantially radar-transparent and light-transparent or light-translucent material and having a first surface (24) and a second surface (26), wherein the cover member (18) at least partially encloses the structural member (20),
- a light-reflective layer (32) at least partially applied to the first surface (24), and
- a further structural member (40) applied to the light-reflective layer (32) or to the structural member (20), wherein
- the structural member (20) forms at least one subsection (B1, B2, B3, B4) in which a distance (D, D1, D2, D3, D4) between the first surface (24) and the second surface (26) is continuously decreased.

2. Radome (14) according to claim 1,
**characterized in that** the radome (14) comprises at least one light source (44) for illuminating the radome (14) which is arranged such that the light provided by the light source (44) is coupled into the structural member (20).

3. Radome (14) according to claim 2,
**characterized in that** the radome (14) comprises
- a first subsection (B1) having a first distance (D1) and a second subsection (B2) having a second distance (D2), wherein the second subsection (B2) is arranged further away from the light source (44) than the first subsection (B1), wherein
- the second distance (D2) is smaller than the first distance (D1).

4. Radome (14) according to one of the claims 1 to 3,
**characterized in that**
- between the cover member (18) and the structural member (20)
∘ **an air gap** (37) is formed, or
∘ an at least substantially radar-transparent and light transparent or light translucent material (39) with a low refractive-index layer (41) that has a refractive index lower than the refractive index of the structural member (20) is arranged,
∘ a low refractive-index layer (41) with a refractive index that is lower than the refractive index of the structural member (20), or
∘ a further light reflective layer (34) with cut-outs (38) for light outcoupling is arranged, or
- the cover member (18) is made of material with a refractive index which is lower than the refractive index of the material of the structural member (20).

5. Radome (14) according to one of the claims 2 to 4,
**characterized in that**
- the light sources (44) are arranged inside a housing (46) that
∘ is fastened to the cover member (18) and/or the structural member (20) and
∘ forms an inner opening (50) for the radar waves (λr) or
- the light sources (44) are fastened to the structural member (20) or to the cover member (18).

6. Radome (14) according to claim 5,
**characterized in that** the light-reflective layer (32) and/or the further light-reflective layer (34) is opaque to light.

7. Radome (14) according to one of the claims 5 or 6,
**characterized in that** the light-reflective layer (32) comprises white or colored PC, PMMA or PET film or resin, white or colored acquer, white or colored tampon or pad print, white or colored screen print and/or metallized and/or a white or other color pigment.

8. Radome (14) according to claim 7,
**characterized in that**
- the structural member (20) has a second surface (26) and the further structural member (40) has an inwardly facing surface (42), and
- the radome (14) forms a radome distance (DR) between the second surface (26) and the inwardly facing surface (42), wherein the radome distance (DR) stays constant at least in sections.

9. Radome (14) according to one of the preceding claims
**characterized in that** the radome (14) comprises a decorative layer (36) arranged
- between the structural member (20) and the cover member (18) and/or
- on the outer surface (28).

10. Radome (14) according to one of the preceding claims
**characterized in that** a further light-reflective layer (34) is at least partially applied to the second surface (26).

11. Radome (14) according to claims 9 and 10,
**characterized in that** the decorative layer (36) and/or the further light-reflective layer (34) forms one or more cut-outs (38).

12. Radar device (101, 102, 103, 104) of or for a vehicle (12), comprising
- a radome (14) according to one of the preceding claims, and
- a radar source (16) for providing radar waves (λr).

13. Cladding component (54) of or for a vehicle (12), comprising
- a radome (14) according to one of the claims 1 to 11 and/or
- a radar device (101, 102, 103, 104) according to claim 12.

14. Vehicle (12), comprising
- a radome (14) according to one of the claims 1 to 11 and/or
- a radar device (101, 102, 103, 104) according to claim 12 and/or
- cladding component (54) according to claim 13.

## Amended claims

### Amended claims in accordance with Rule 137(2) EPC.

1. **Radome** (14) for a radar device (101, 102, 103, 104) of or for a vehicle, the radome (14) comprising
- a cover member (18) made of at least substantially radar-transparent and light-transparent or light-translucent material,
- a structural member (20) made of at least substantially radar-transparent and light-transparent or light-translucent material and having a first surface (24) and a second surface (26), wherein the cover member (18) at least partially encloses the structural member (20),
- a light-reflective layer (32) at least partially applied to the first surface (24), and
- a further structural member (40) applied to the light-reflective layer (32) or to the structural member (20), wherein
- the structural member (20) forms at least one subsection (B1, B2, B3, B4) in which a distance (D, D1, D2, D3, D4) between the first surface (24) and the second surface (26) is continuously decreased,
- at least one light source (44) for illuminating the radome (14) which is arranged such that the light provided by the light source (44) is coupled into the structural member (20),
**characterized in that** the radome (14) comprises
- a first subsection (B1) having a first distance (D1) and a second subsection (B2) having a second distance (D2), wherein the second subsection (B2) is arranged further away from the light source (44) than the first subsection (B1), wherein
- the second distance (D2) is smaller than the first distance (D1).

2. Radome (14) according to claim 1,
**characterized in that**
- between the cover member (18) and the structural member (20)
∘ an air gap (37) is formed, or
∘ an at least substantially radar-transparent and light transparent or light translucent material (39) with a low refractive-index layer (41) that has a refractive index lower than the refractive index of the structural member (20) is arranged,
∘ a low refractive-index layer (41) with a refractive index that is lower than the refractive index of the structural member (20), or
∘ a further light reflective layer (34) with cut-outs (38) for light outcoupling is arranged, or
- the cover member (18) is made of material with a refractive index which is lower than the refractive index of the material of the structural member (20).

3. Radome (14) according to one of the claims 1 or 2,
**characterized in that**
- the light sources (44) are arranged inside a housing (46) that
∘ is fastened to the cover member (18) and/or the structural member (20) and
∘ forms an inner opening (50) for the radar waves (λr) or
- the light sources (44) are fastened to the structural member (20) or to the cover member (18).

4. Radome (14) according to claim 3,
**characterized in that** the light-reflective layer (32) and/or the further light-reflective layer (34) is opaque to light.

5. Radome (14) according to one of the claims 3 or 4,
**characterized in that** the light-reflective layer (32) comprises white or colored PC, PMMA or PET film or resin, white or colored lacquer, white or colored tampon or pad print, white or colored screen print and/or metallized and/or a white or other color pigment.

6. Radome (14) according to claim 5,
**characterized in that**
- the structural member (20) has a second surface (26) and the further structural member (40) has an inwardly facing surface (42), and
- the radome (14) forms a radome distance (DR) between the second surface (26) and the inwardly facing surface (42), wherein the radome distance (DR) stays constant at least in sections.

7. Radome (14) according to one of the preceding claims
**characterized in that** the radome (14) comprises a decorative layer (36) arranged
- between the structural member (20) and the cover member (18) and/or
- on the outer surface (28).

8. Radome (14) according to one of the preceding claims
**characterized in that** a further light-reflective layer (34) is at least partially applied to the second surface (26).

9. Radome (14) according to claims 7 and 8,
**characterized in that** the decorative layer (36) and/or the further light-reflective layer (34) forms one or more cut-outs (38).

10. Radar device (101, 102, 103, 104) of or for a vehicle (12), comprising
- a radome (14) according to one of the preceding claims, and
- a radar source (16) for providing radar waves (λr).

11. Cladding component (54) of or for a vehicle (12), comprising
- a radome (14) according to one of the claims 1 to 9 and/or
- a radar device (101, 102, 103, 104) according to claim 10.

12. Vehicle (12), comprising
- a radome (14) according to one of the claims 1 to 9 and/or
- a radar device (101, 102, 103, 104) according to claim 10 and/or
- cladding component (54) according to claim 11.
